# EUROPÄISCHE PATENTSCHRIFT

(11) **EP 1 668 282 B1**
(45) Veröffentlichungstag und Bekanntmachung des Hinweises auf die Patenterteilung: **23.04.2008**
(21) Anmeldenummer: 04786815.3
(22) Anmeldetag: 20.09.2004
(51) Int. Cl.: F16K 17/10

(54) **DRUCK-EINSPEISEVENTIL**
FEED PRESSURE VALVE
SOUPAPE D'ALIMENTATION EN PRESSION

(30) Priorität: 01.10.2003 DE 10345712
(43) Veröffentlichungstag der Anmeldung: 14.06.2006
(73) Patentinhaber: Bosch Rexroth AG, 70184 Stuttgart (DE)
(72) Erfinder: KRUG-KUSSIUS, Karl, 97783 Karsbach (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2004/002097
(87) Internationale Veröffentlichungsnummer: WO 2005/033566

(56) Entgegenhaltungen:
- EP-A- 0 908 653
- EP-A- 1 312 843
- DE-A1- 4 304 796
- DE-A1- 10 145 975

## Beschreibung

Die Erfindung betrifft ein Druck-Einspeiseventil gemäß dem Oberbegriff des Patentanspruchs 1.

Derartige Druck-Einspeiseventile werden beispielsweise als Arbeitsventil in hydrostatischen Antrieben, beispielsweise Fahr- und Drehwerksantrieben und zur Absicherung von Linearverbrauchern, beispielsweise Zylindern im offenen oder geschlossenen hydraulischen Kreislauf verwendet. Bei Fahr/Drehwerksantrieben werden diese Ventile beispielsweise eingesetzt, um bei Überschreiten eines vorgegebenen Systemdrucks eine Verbindung von der Hochdruckseite zur Niederdruckseite aufzusteuern. Dabei wird dann Druckmittel an einen Hydromotor des Dreh/Fahrwerkantriebs vorbei vom Hochdruckzweig in den Niederdruckzweig geführt, so dass Druckspitzen im Hochdruckzweig vermieden werden können. In der Nachsaugfunktion kann - beispielsweise bei einer Bergabfahrt - Druckmittel vom Niederdruckzweig (der dann eigentlich den höheren Druck führt) in den Hochdruckzweig nachgesaugt werden, so dass eine Kavitation verhinderbar ist.

In der DE 101 20 643 A1 und der DE 101 45 975 A1 sind gattungsgemäße vorgesteuerte Druck-Einspeiseventile offenbart, bei denen eine Hauptstufe mit einem Kolben ausgeführt ist, der von einer Druckfeder in eine Schließstellung vorgespannt ist, in der die Verbindung von einem stirnseitigen Druckanschluss zu einem als Radialbohrungsstern ausgeführten Niederdruckanschluss (Tank) abgesperrt ist.

Ein Federraum der Hauptstufe ist über eine Vorsteuerstufe mit einem Steuerölablaufanschluss verbindbar. Diese Vorsteuerstufe hat einen Vorsteuerventilkörper, der mittels einer Steuerfeder in eine Schließposition vorgespannt ist, in der der Druckmittelströmungspfad zwischen dem Federraum und dem Steuerölablaufanschluss abgesperrt ist.

Der Kolben der Hauptstufe hat eine axial verlaufende Bohrung, über die der Federraum mit einem von der Stirnfläche des Kolbens begrenzten Druckraum verbunden ist, in dem der Systemdruck anliegt. Bei Überschreiten eines voreingestellten Systemdrucks wird der Vorsteuerventilkörper gegen die Kraft der Steuerfeder von seinem Vorsteuerventilsitz abgehoben, so dass Steueröl aus dem Federraum über die Vorsteuerstufe abströmen kann. Durch diese Steuerölströmung entsteht ein Druckabfall über der Axialbohrung des Kolbens, so dass die Kolbenrückseite entsprechend entlastet wird und gegen die Kraft der Druckfeder die Verbindung zwischen dem stirnseitigen Druckanschluss und dem radialen Niederdruckanschluss aufgesteuert wird - der Regelkolben stellt sich in eine Regelposition ein, in der der Systemdruck auf den voreingestellten Maximalwert begrenzt wird. Zur Minimierung der Steuerölströmung über die Vorsteuerstufe wird angestrebt, die Axialbohrung des Kolbens möglichst klein auszuführen. Eine kleine Axialbohrung des Kolbens hat jedoch den Nachteil, dass in der Nachsaugfunktion ein Abströmen des Steueröls vom Federraum über die Axialbohrung zum axial verlaufenden Hochdruckanschluss behindert wird, so dass die Kolbenrückseite vergleichsweise langsam druckentlastet wird und der Nachsaugvorgang verzögert eingeleitet wird. Derartige Verzögerungen sind jedoch bei hochdynamischen Wechselbelastungen des Fahrantriebs nicht akzeptabel, da es zur Vermeidung von Kavitationen erforderlich ist, dass sehr schnell auf die Nachsaugfunktion umgeschaltet werden kann. Darüberhinaus zeigte es sich, dass es bei den herkömmlichen Lösungen im Reversierbetrieb des Fahrwerksmotors aufgrund des langsamen Umschaltens zu unruhig laufenden Drehwerksmotoren kommen kann.

Der DE 101 45 975 A1 wird als nächsliegender Stand der Technik gesehen und korrespondiert mit dem Oberbegriff des Anspruchs 1.

Der Erfindung liegt die Aufgabe zugrunde, ein Druck-Einspeiseventil zu schaffen, bei dem in der Druckbegrenzungsfunktion der Vorsteuerölvolumenstrom minimal ist und in der Nachsaugfunktion die Kolbenrückseite schnell entlastbar ist.

Diese Aufgabe wird durch ein Druck-Einspeiseventil mit den Merkmalen des Patentanspruches 1 gelöst.

Erfindungsgemäß ist das Druck-Einspeiseventil mit einer Drosselventileinrichtung versehen, die derart ausgebildet ist, dass in der Druckbegrenzungsfunktion ein vergleichsweise kleiner Querschnitt für die Steuerölströmung durch den Kolben zur Verfügung gestellt wird, während in der Nachsaugfunktion ein vergleichsweise großer Querschnitt wirkt, der eine schnelle Entlastung eines Federraums einer Hauptstufe des Druck-Einspeiseventils gewährleistet.

Bei einem besonders bevorzugten Ausführungsbeispiel ist die Drosselventileinrichtung durch ein Drosselrückschlagventil ausgebildet, das in den Kolben integriert ist. Das Drosselrückschlagventil hat eine Düsenplatte, die von einer Düsenbohrung mit einem geringeren Durchmesser als die Kolbenbohrung durchsetzt ist. Die Düsenplatte ist in Anlage an einen Düsenplattensitz bringbar, so dass der wirksame Querschnitt der Kolbenbohrung durch den Querschnitt der kleineren Düsenbohrung bestimmt ist. In der Nachsaugfunktion hebt die Düsenplatte von dem Düsenplattensitz ab und kann vom Steueröl umströmt werden, so dass nicht die kleinere Düsenbohrung sondern die größere Kolbenbohrung als Strömungsquerschnitt wirksam ist.

Bei einer bevorzugten Variante der Erfindung wird es bevorzugt, wenn der Durchmesser der Düsenbohrung höchstens halb so groß wie der wirksame Durchmesser der Kolbenbohrung ist.

Die Umströmung der Düsenplatte ist optimiert, wenn diese am Umfang mit Abflachungen versehen ist, die einen Umströmungsquerschnitt begrenzen.

Bei einer besonders bevorzugten Variante der Erfindung ist die Düsenplatte mit einer etwa dreieckförmigen Basis ausgebildet, an deren Eckbereichen sich in Öffnungsrichtung erstreckende Stützschenkel vorgesehen sind. Diese Stützschenkel sind in der Nachsaugfunktion in Anlage an eine Anschlagschulter der Kolbenbohrung bringbar, so dass ein sehr großer Umströmungsquerschnitt zur Verfügung gestellt wird, der jeweils von zwei benachbarten Stützschenkeln, der vorgenannten Abflachung und dem benachbarten Außenumfang der Kolbenbohrung begrenzt ist. Bei einer besonders einfach aufgebauten Lösung ist das Drosselrückschlagventil in einen erweiterten Teil der Kolbenbohrung eingesetzt, wobei eine in diese eingeschraubte Sitzhülse den Düsenplattensitz ausbildet.

Das erfindungsgemäße Druck-Einspeiseventil kann in geschlossenen oder offenen Hydraulikkreisläufen mit Konstant-/Verstellmotoren oder -pumpen verwendet werden.

Sonstige vorteilhafte Weiterbildungen der Erfindung sind Gegenstand weiterer Unteransprüche. Im folgenden wird ein bevorzugtes Ausführungsbeispiel der Erfindung anhand schematischer Zeichnungen näher erläutert. Es zeigen:
Figur 1 einen Längsschnitt durch ein erfindungsgemäßes Druck-Einspeiseventil;
Figuren 2 und 3 Detaildarstellungen des Druckeinspeiseventils aus Figur 1 und
Figur 4 das Druckeinspeiseventil aus Figur 1 in verschiedenen Betriebszuständen.

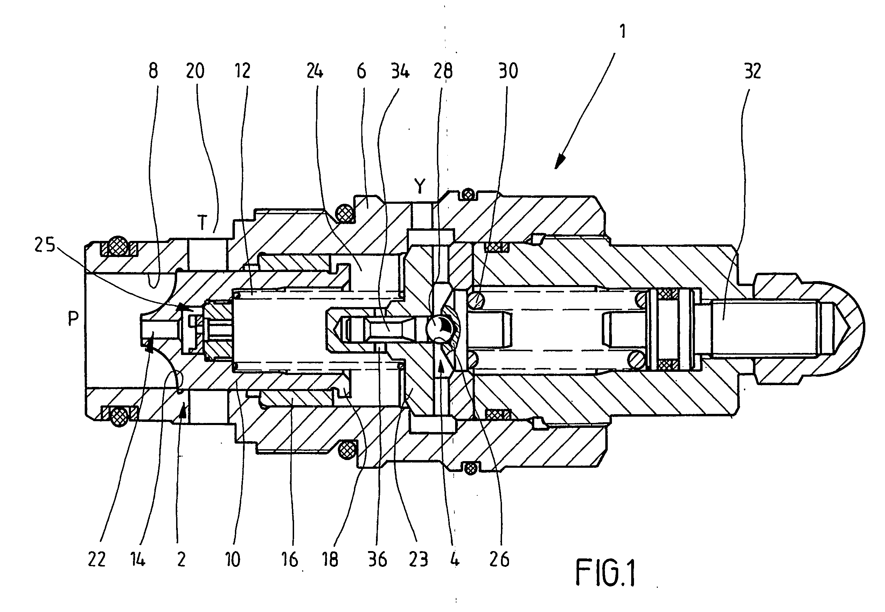

Figur 1 zeigt einen Längsschnitt durch ein vorgesteuertes Druck-Einspeiseventil 1, dessen Grundaufbau aus der DE 101 45 975 A1 und der DE 101 20 643 A1 bekannt ist, so dass im Folgenden lediglich auf die zum Verständnis der vorliegenden Erfindung wesentlichen Bauteile eingegangen wird und im Übrigen auf die vorgenannten Druckschriften verwiesen wird.

Das Druck-Einspeiseventil 1 hat eine Hauptstufe 2 und eine Vorsteuerstufe 4, die in einem patronenförmigen Gehäuse 6 ausgebildet sind. Dieses hat einen axialen Anschluss P, der beispielsweise mit der Hochdruckseite eines Fahrwerkantriebs verbunden ist. Ein durch einen Radialbohrungsstern ausgebildeter Ausgangsanschluss T ist mit der Niederdruckseite des hydraulischen Systems verbunden.

Das Gehäuse ist von einer Axialbohrung 8 durchsetzt, in der ein Kolben 10 der Hauptstufe axial verschiebbar geführt ist. Diese ist mit einem Schiebesitz ausgeführt, wobei der Kolben 10 über eine Druckfeder 12 gegen eine Ringschulter 14 der Axialbohrung vorgespannt ist. Der Kolben 10 ist dadurch in der Schließposition mit einer Flächendifferenz ausgeführt, wobei die in Öffnungsrichtung wirksame Stirnfläche kleiner als die in Schließrichtung wirksame Stirnfläche ist.

Der vom Anschluss P entfernte Endabschnitt des Kolbens 10 ist von einem Nachsaugring 16 umgriffen, der in Anlage an einen rückseitigen Anschlagbund 18 des Kolbens 10 bringbar ist. Dieser Nachsaugring 16 ist stirnseitig über eine Parallelbohrung des Radialbohrungssterns 20 mit dem Druck am Tankanschluss (Niederdruckseite) beaufschlagt.

Der Kolben 10 ist als Hohlkolben ausgeführt und wird von einer Kolbenbohrung 22 durchsetzt, die nach rechts hin (Figur 1) stufenförmig erweitert ist. In dieser Kolbenbohrung 22 ist ein Drosselrückschlagventil 25 vorgesehen, dessen Aufbau im Folgenden näher erläutert wird.

Die Druckfeder 12 taucht abschnittsweise in den radial erweiterten Teil der Kolbenbohrung 22 ein und ist an einem Reduzierstück 23 abgestützt, das eine stirnseitige Begrenzung eines Federraums 24 bildet.

An der in Figur 1 rechten Stirnfläche des Reduzierstücks 23 ist ein Vorsteuerventilsitz 26 für einen kugelförmigen Vorsteuerventilkörper 28 ausgebildet. Dieser ist über eine Steuerfeder 30 in seine Schließposition gegen den Vorsteuerventilsitz 26 vorgespannt. Die Vorspannung der Steuerfeder 30 lässt sich mittels einer Stellschraube 32 zur Einstellung des Systemdrucks verändern.

Das Reduzierstück 23 hat einen in den Federraum 24 eintauchenden nabenförmigen Vorsprung, in dem eine Sacklochbohrung ausgebildet ist, durch deren Mündung der vorgenannte Ventilsitz 26 ausgebildet ist. In dieser Sacklochbohrung ist ein Dämpfungskölbchen 34 axial verschiebbar geführt, das in Anlage an den Vorsteuerventilkörper 28 bringbar ist. Die Sacklochbohrung ist über Radialbohrungen 36 mit dem Federraum 24 verbunden. Der in Figur 1 rechte Endabschnitt des Dämpfungskölbchens 34 ist mit Radialspiel geführt, so dass zwischen der Innenumfangswandung der Sacklochbohrung und dem Außenumfang des Dämpfungskölbchens 34 ein ringförmiger Dämpfungsspalt ausgebildet ist. Wie in der DE 101 45 975 A1 ausführlich dargelegt, bewirkt dieses Dämpfungskölbchen 34 eine halbwellenförmige Dämpfung, die ein schnelles Öffnen und gedämpftes Schließen der Vorsteuerstufe 4 ermöglicht.

Der sich in Figur 1 rechts an den Vorsteuerventilsitz 26 anschließende Druckraum ist über einen externen Steuerölanschluss Y mit dem Tank oder der Niederdruckseite verbunden. Anstelle dieses externen Anschlusses kann dieser Druckraum auch intern mit dem Tankanschluss T verbunden werden, wobei beispielsweise eine Längsbohrung im Gehäuse 6 vorgesehen wird.

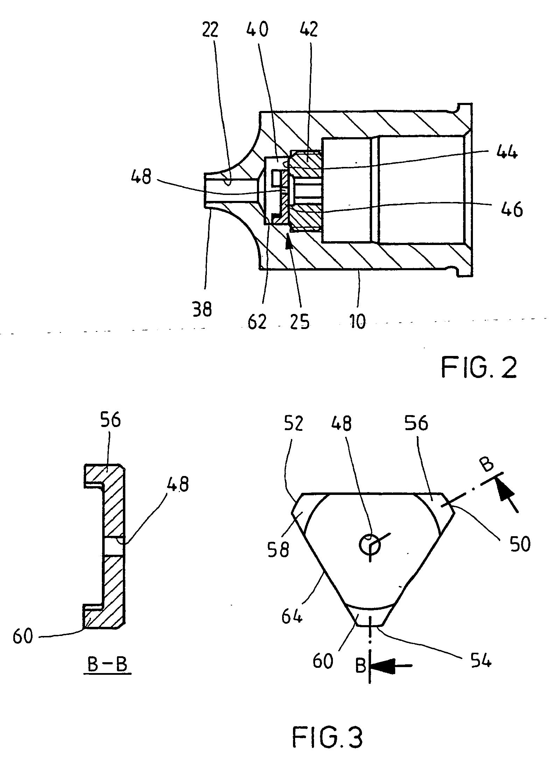

Figur 2 zeigt eine Detaildarstellung des Kolbens 10 der Hauptstufe 2. Demgemäß ist die in Figur 2 linke Stirnfläche des Kolbens 10 mit einem Vorsprung 38 ausgeführt, in dem die Kolbenbohrung 22 mündet. Diese ist nach rechts hin (Ansicht nach Figur 2) stufenförmig erweitert, wobei in Anschluss an die Kolbenbohrung 22 ein Ventilraum 40 ausgebildet ist, in dem das Drosselrückschlagventil 25 aufgenommen ist. In diesen Ventilraum 40 ist eine Sitzhülse 42 eingeschraubt, deren vordere (links in Figur 2) Stirnfläche als Sitzfläche 44 ausgeführt ist. Das Ventilglied des Drosselrückschlagventils 25 ist durch eine Düsenplatte 46 ausgebildet, die von einer Düsenbohrung 48 durchsetzt ist. Diese hat einen wesentlich kleineren Durchmesser als die im Bereich des Vorsprungs 38 mündende Kolbenbohrung 22.

Figur 3 zeigt eine Draufsicht von links auf die Düsenplatte 46 in Figur 2 und einen Schnitt entlang der Linie B-B. Demgemäß hat diese eine etwa dreieckförmige Stirnfläche mit abgerundeten Eckbereichen 50, 52, 54, deren Krümmungsradius etwa dem Radius des Ventilraums 40 entspricht, so dass diese Eckbereiche gleitend an der Innenumfangswandung anliegen. Die Düsenbohrung 48 ist im Zentrum dieser Dreiecksstruktur ausgebildet.

Die Eckbereiche 50, 52, 54 mit Stützschenkeln 56, 58, 60 versehen, die sich hin zu der in Figur 2 linken Ringstirnfläche 62 des Ventilraums 40 erstrecken. Wie im Folgenden noch näher beschrieben wird, gelangen diese Stützschenkel 56, 58, 60 bei geöffnetem Drosselrückschlagventil 25 in Anlage an die Ringstirnfläche 62, so dass die Düsenplatte 46 bei einer Steuerölströmung vom Federraum 24 zur Kolbenbohrung 22 umströmt wird, wobei diese Umströmung entlang den die Dreiecksstruktur ausbildenden Abflachungen (Seitenkanten) 64 und jeweils zwischen zwei benachbarten Schenkeln 54, 56; 56, 52 und 52, 54 hindurch erfolgt.

Der minimale Durchströmungsquerschnitt für das Steueröl wird bei geschlossenem Drosselrückschlagventil 25 durch den Durchmesser der Düsenbohrung 48 und bei geöffnetem Drosselrückschlagventil 25 durch den Durchmesser der wesentlich größeren Kolbenbohrung 22 bestimmt. Bei dem dargestellten Ausführungsbeispiel ist dieser Durchmesser zumindest zwei Mal so groß wie der Durchmesser der Düsenbohrung 48, so dass deren Drosselwirkung wesentlich stärker ist. Der Durchflussquerschnitt der Radialbohrungen 36 ist ebenfalls größer als derjenige der Düsenbohrung 48 gewählt.

In der in Figur 1 dargestellten Grundposition des Nachsaugventils 1 ist der Kolben 10 in seine Schließstellung vorgespannt, die Vorsteuerstufe 4 ist geschlossen und die Düsenplatte 46 des Drosselrückschlagventils 25 liegt dichtend auf der Sitzfläche 44 der Sitzhülse 42 auf, so dass Steueröl vom stirnseitigen Anschluss P durch die Düsenbohrung 48 hindurch in den Federraum 24 eintreten kann. Aufgrund der Flächendifferenz des Kolbens 10 wird dieser durch _das wirksame Druckkraftäquivalent zusätzlich zur Kraft der Druckfeder 12 in seine Schließstellung vorgespannt.

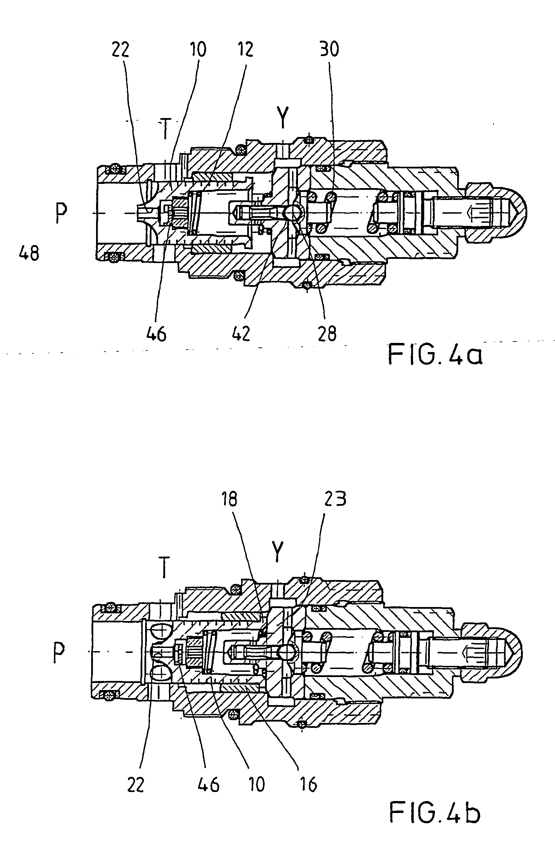

Bei einer Druckerhöhung am Anschluss P steigt entsprechend auch der Druck im Federraum 24 an, so dass etwa dieser Druck auch am Vorsteuerventilsitz 26 wirkt. Bei Überschreiten des voreingestellten Systemdrucks wird der Vorsteuerventilkörper 28 gegen die Kraft der Steuerfeder 30 vom Vorsteuerventilsitz 26 abgehoben, so dass Steueröl aus dem Federraum 24 über die geöffnete Vorsteuerstufe 4 zum Tank T hin abströmen kann. Durch die resultierende Entlastung der Rückseite des Kolbens 10 hebt dieser von der Ringschulter 14 ab, so dass die Verbindung von P nach T aufgesteuert wird. Der Kolben 10 stellt sich in eine Regelposition ein, in der der Systemdruck am Anschluss P auf den eingestellten Maximalwert begrenzt ist. Dabei wird die Düsenplatte 46 gegen die Sitzfläche 44 gedrückt, so dass die Steuerölströmung durch den Durchmesser der vergleichsweise kleinen Düsenbohrung 48 bestimmt ist. D.h. der Steuerölvolumenstrom in der Druckbegrenzungsfunktion des Druck-Einspeisesaugventils 1 ist sehr gering, so dass bei geschlossenen Kreisläufen lediglich diese geringe Steuerölmenge und die Motorleckage eingespeist werden muss. Dieser Betriebszustand ist in Figur 4a) dargestellt.

In der Nachsaugfunktion, d.h. dann, wenn der Druck am Anschluss P unter den Druck am Anschluss T absinkt (siehe Figur 4b)), wird zunächst der Nachsaugring 16 durch den auf seine linke Stirnfläche wirkenden höheren Druck am Anschluss T nach rechts verschoben, bis er auf den Anschlagbund 18 aufläuft und der Kolben 10 von der Ringschulter 14 abgehoben wird und auf die benachbarte Stirnfläche des Reduzierstücks 23 aufläuft - die Verbindung vom Anschluss T zum Anschluss P ist vollständig geöffnet, so dass Druckmittel nachgesaugt werden kann. Aufgrund des geringen Druckes am Anschluss P wird die Düsenplatte 46 in der Nachsaugfunktion von der Sitzhülse 42 abgehoben, so dass der Federraum 24 sehr schnell über die Kolbenbohrung 22 entlastet wird, wobei die abgehobene Düsenplatte 46 umströmt wird, so dass die Düsenbohrung 48 nicht wirksam ist. Durch das Öffnen des Drosselrückschlagventils 25 ist ein schnelles Umschalten auf die Nachsaugfunktion gewährleistet, so dass Kavitationen zuverlässig vermeidbar sind.

Kehren sich die Druckverhältnisse wieder um, d.h. beim Ansteigen des Druckes am Anschluss P über den Druck am Anschluss T wird der Kolben 10 wieder in seine Schließstellung zurück bewegt, wobei diese Schließbewegung durch die Wirkung der Düsenplatte mit der kleinen Düsenbohrung 48 gedämpft ist. Dieser zeitlich langsame Schließvorgang des Kolbens 10 lässt einen kleinen Druckmittelmengenausgleich zwischen den Anschlüssen eines Hydromotors zu, so dass dieser nicht verspannt wird.

Wie eingangs erwähnt, können die erfindungsgemäßen Druck-Einspeiseventile 1 beispielsweise bei Drehwerkantrieben in einem offenen Kreislauf oder einem geschlossenen Kreislauf geschaltet sein, wobei der Hochdruckseite und der Niederdruckseite jeweils eines der Druck-Einspeiseventile zugeordnet sein kann. Derartige Schaltungen sind per se bekannt, so dass Ausführungen hierzu nicht erforderlich sind.

Offenbart ist ein vorgesteuertes Druck-Einspeiseventil mit einer Hauptstufe und einer Vorsteuerstufe, wobei die Hauptstufe einen Kolben hat, der in eine Schließstellung vorgespannt ist. Der Kolben ist mit einer Kolbenbohrung versehen, über die ein Eingangsanschluss mit einem rückseitigen Federraum verbindbar ist. Dieser Kolbenbohrung ist eine Drosselventileinrichtung zugeordnet, die in der Druckbegrenzungsfunktion des Druck-Einspeiseventils einen vergleichsweise kleinen Strömungsquerschnitt für das Steueröl und in der Nachsaugfunktion einen vergleichsweise großen Strömungsquerschnitt zur Verfügung stellt.

### Bezugszeichenliste:

- 1: Druck-Einspeiseventil
- 2: Hauptstufe
- 4: Vorsteuerstufe
- 6: Gehäuse
- 8: Axialbohrung
- 10: Kolben
- 12: Druckfeder
- 14: Ringschulter
- 16: Nachsaugring
- 18: Anschlagbund
- 20: Radialbohrungsstern
- 22: Kolbenbohrung
- 23: Reduzierstück
- 24: Federraum
- 25: Drosselrückschlagventil
- 26: Vorsteuerventilsitz
- 28: Vorsteuerventilkörper
- 30: Steuerfeder
- 32: Stellschraube
- 34: Dämpfungskölbchen
- 36: Radialbohrungen
- 38: Vorsprung
- 40: Ventilraum
- 42: Sitzhülse
- 44: Sitzfläche
- 46: Düsenplatte
- 48: Düsenbohrung
- 50: Eckbereich
- 52: Eckbereich
- 54: Eckbereich
- 56: Stützschenkel
- 58: Stützschenkel
- 60: Stützschenkel
- 62: Ringstirnfläche
- 64: Abflachung

## Patentansprüche

1. Vorgesteuertes Druck-Einspeiseventil mit einem Kolben (10) einer Hauptstufe, über den eine Verbindung zwischen einem Eingangsanschluss (P) und einem Ausgangsanschluss (T) aufsteuerbar ist und dessen Federraum (24) über eine Kolbenbohrung (22) mit dem Eingangsanschluss (P) und über eine Vorsteuerstufe (4) mit einem Steuerölablauf (Y) verbindbar ist, **gekennzeichnet durch** eine Drosselventileinrichtung (25), die in einer Schließstellung eine Steuerölströmung **durch** die Kolbenbohrung (22) vom Eingangsanschluss (P) in den Federraum (24) drosselt und in der Nachsaugfunktion bei einer Steuerölströmung in umgekehrter Richtung einen vergleichsweise großen Strömungsquerschnitt aufsteuert.

2. Druck-Einspeiseventil nach Patentanspruch 1, wobei die Drosselventileinrichtung ein Drosselrückschlagventil (25) mit einer Düsenplatte (46) ist, die von einer Düsenbohrung (48) mit geringerem Durchmesser als die Kolbenbohrung (22) durchsetzt ist, und die mit einer Stirnfläche in Anlage an einen Düsenplattensitz (44) bringbar ist, wobei die Düsenbohrung (48) bei vom Düsenplattensitz (44) abgehobener Düsenplatte (46) durch deren Umströmung umgehbar ist.

3. Druck-Einspeiseventil nach Patentanspruch 2, wobei der Durchmesser der Düsenbohrung (48) höchstens halb so groß wie der Durchmesser der Kolbenbohrung (22) ist.

4. Druck-Einspeiseventil nach Patentanspruch 2 oder 3, wobei die Düsenplatte (46) am Umfang Abflachungen (64) hat, die einen Umströmungsquerschnitt begrenzen.

5. Druck-Einspeiseventil nach Patentanspruch 4, wobei die Düsenplatte (46) eine etwa dreieckförmige Basis hat, an deren Eckbereichen (50, 52, 54) Stützschenkel (56, 58, 60) ausgebildet sind, die in Anlage an eine Ringstirnfläche (62) der Kolbenbohrung (22, 40) bringbar sind und die mit ihren gekrümmten Außenumfangsflächen an den Innenumfangswandungen eines erweiterten Teils (40) der Kolbenbohrung (22) anliegen.

6. Druck-Einspeiseventil nach einem der Patentansprüche 2 bis 5, wobei das Drosselrückschlagventil (25) in einen Ventilraum (40) der Kolbenbohrung (22) eingesetzt ist, in den eine den Düsenplattenventilsitz (44) ausbildende Sitzhülse (42) eingesetzt ist.

7. Druck-Einspeiseventil nach einem der vorhergehenden Patentansprüche, wobei dieses in geschlossenen oder offenen Hydraulikkreisen mit Konstant-/Verstellmotoren oder Pumpen verwendbar ist.

## Claims

1. Pilot-controlled pressure feed valve, comprising a piston (10) of a main stage whereby a connection between an input port (P) and an output port (T) may be controlled open, and the spring chamber (24) of which is adapted to be connected with the input port (P) via a piston bore (22) and with a control oil drain (Y) via a pilot control stage (4), **characterized by** a throttle valve means (25) which throttles a control oil flow through the piston bore (22) from the input port (P) into the spring chamber (24) in a closed position, and controls open a comparatively large cross-section of flow in the anti-cavitation function in the event of a control oil flow in the opposite direction.

2. The pressure feed valve in accordance with claim 1, wherein the throttle valve means is a throttle check valve (25) having a nozzle plate (46) which is penetrated by a nozzle bore (48) having a smaller diameter than the piston bore (22), and which is adapted to be taken with an end face thereof into contact with a nozzle plate seat (44), wherein the nozzle bore (48) may be passed by in a condition where the nozzle plate (46) is raised from the nozzle plate seat (44) by a flow around said nozzle plate.

3. The pressure feed valve in accordance with claim 2, wherein the diameter of the nozzle bore (48) is half the diameter of the piston bore (22) at the most.

4. The pressure feed valve in accordance with claim 2 or 3, wherein the nozzle plate (46) has at the circumference flattenings (64) which delimit a cross-section of bypass flow.

5. The pressure feed valve in accordance with claim 4, wherein the nozzle plate (46) has an approximately triangular base, at the corner ranges (50, 52, 54) of which supporting legs (56, 58, 60) are formed which are adapted to be taken into contact with an annular end surface (62) of the piston bore (22, 40), and the curved outer circumference surfaces of which are in contact against the inner circumference walls of an expanded part (40) of the piston bore (22).

6. The pressure feed valve in accordance with any one of claims 2 to 5, wherein the throttle check valve (25) is inserted into a valve chamber (40) of the piston bore (22) into which a seat sleeve (42) forming the nozzle plate valve seat (44) is inserted.

7. The pressure feed valve in accordance with any one of the preceding claims, wherein it is usable in closed or open hydraulic circuits with fixed/variable displacement motors or pumps.

## Revendications

1. Soupape d'alimentation de pression pilotée avec un piston (10) d'un étage principal, au moyen de laquelle une communication entre un raccord d'entrée (P) et un raccord de sortie (T) peut être commandée et dont la chambre à ressort (24) peut être mise en communication avec le raccord d'entrée (P) par un alésage de piston (22) et avec un orifice de sortie d'huile de commande (Y) par un étage pilote (4), **caractérisée par** un dispositif de soupape d'étranglement (25) qui, dans une position de fermeture, étrangle un flux d'huile de commande à travers l'alésage de piston (22) d'un raccord d'entrée (P) dans la chambre à ressort (24) et qui, en fonctionnement d'alimentation avec un flux d'huile de commande dans le sens inverse, commande en ouverture une section transversale d'écoulement comparativement grande.

2. Soupape d'alimentation de pression selon la revendication 1, dans laquelle le dispositif de soupape d'étranglement est une soupape anti-retour d'étranglement (25) avec une plaque d'injecteur (46) qui est traversée par un alésage d'injecteur (48) avec un diamètre inférieur à celui de l'alésage de piston (22) et qui peut être mise en appui avec une face frontale sur un logement de plaque d'injecteur (44), l'alésage d'injecteur (48) pouvant être contourné par le flux de contournement de la plaque d'injecteur (46) lorsque celle-ci est soulevée par le logement de plaque d'injecteur (44).

3. Soupape d'alimentation de pression selon la revendication 2, dans laquelle le diamètre de l'alésage d'injecteur (48) est au maximum égal à la moitié du diamètre de l'alésage de piston (22).

4. Soupape d'alimentation de pression selon la revendication 2 ou 3, dans laquelle la plaque d'injecteur (46) comporte sur sa circonférence des méplats (64) qui délimitent une section transversale de flux de contournement.

5. Soupape d'alimentation de pression selon la revendication 4, dans laquelle la plaque d'injecteur (46) présente une base à peu près triangulaire dans les zones d'angle (50, 52, 54) de laquelle sont formés des montants de support (56, 58, 60) qui peuvent être mis en appui sur une face frontale annulaire (62) de l'alésage de piston (22, 40) et qui s'appuient avec leurs faces circulaires extérieures recourbées sur les parois circulaires intérieures d'une partie élargie (40) de l'alésage de piston (22).

6. Soupape d'alimentation de pression selon l'une quelconque des revendications 2 à 5, dans laquelle la soupape anti-retour d'étranglement (25) est insérée dans une chambre de soupape (40) de l'alésage de piston (22) dans laquelle est insérée une douille de logement (42) formant le logement de plaque d'injecteur (44).

7. Soupape d'alimentation de pression selon l'une quelconque des revendications précédentes, celle-ci pouvant être utilisée dans des circuits hydrauliques ouverts ou fermés avec des moteurs ou des pompes à cylindrée constante/à cylindrée variable.
